# EUROPÄISCHE PATENTSCHRIFT

(11) **EP 0 938 507 B1**
(45) Veröffentlichungstag und Bekanntmachung des Hinweises auf die Patenterteilung: **13.08.2003**
(21) Anmeldenummer: 97950183.0
(22) Anmeldetag: 12.11.1997
(51) Int. Cl.: C08B 37/10, C08B 37/08, A61K 31/726

(54) **VERFAHREN ZUM HERSTELLEN VON ABBAUPRODUKTEN POLYMERER GLYCOSAMINOGLYCANE MITTELS ULTRASCHALL**
PROCESS FOR PREPARING BREAKDOWN PRODUCTS OF POLYMER GLYCOSAMINOGLYCANS BY MEANS OF ULTRASOUND
PROCEDE POUR PRODUIRE DES PRODUITS DE DEGRADATION DE GLYCOSAMINOGLYCANES POLYMERES A L'AIDE D'ULTRASONS

(30) Priorität: 13.11.1996 DE 19646901
(43) Veröffentlichungstag der Anmeldung: 01.09.1999
(73) Patentinhaber: Portenlänger, Günther, 85622 Feldkirchen (DE); Heusinger, Helmut, 85293 Steinkirchen (DE); Haas, Sylvia, 81925 München (DE); Stemberger, Axel, Dr., D-85579 Neubiberg (DE); Gruhn, Bernhard, 85354 Freising (DE)
(72) Erfinder: Portenlänger, Günther, 85622 Feldkirchen (DE); Heusinger, Helmut, 85293 Steinkirchen (DE); Haas, Sylvia, 81925 München (DE); Stemberger, Axel, Dr., D-85579 Neubiberg (DE); Gruhn, Bernhard, 85354 Freising (DE)
(74) Vertreter: Beetz & Partner Patentanwälte
(86) Internationale Anmeldenummer: EP9706318
(87) Internationale Veröffentlichungsnummer: WO98021247

(56) Entgegenhaltungen:
- EP-A- 0 511 932
- CH-A- 630 099
- CHABRECEK P ET AL: "COMPARATIVE DEPOLYMERIZATION OF SODIUM HYALURONATE BY ULTRASONIC AND ENZYMATIC TREATMENTS" APPLIED POLYMER SYMPOSIA, Bd. 48, 1991, Seiten 233-241, XP000647689
- KUBO K ET AL: "DEPOLYMERIZATION OF HYALURONAN BY SONICATION" GLYCOCONJUGATE JOURNAL, Bd. 10, Nr. 6, Dezember 1993, Seiten 435-439, XP000646443
- CHEMICAL ABSTRACTS, vol. 69, no. 20, 11.November 1968 Columbus, Ohio, US; abstract no. 80162s, OTSUKA AKINOBU ET AL.: "Use of ultrasonic waves in pharmacy." Seite 7513; XP002060927 & YAKUZAIGAKU, Bd. 26, Nr. 3, 1966, Seiten 207-210,
- PATENT ABSTRACTS OF JAPAN Bd. 009, Nr. 028 (C-264) 06 Februar 1985 & JP 59 175 436 A (SHIYOUWA SANGYO KK) 04 Oktober 1984

## Beschreibung

Die Erfindung betrifft ein Verfahren zum Herstellen von Abbauprodukten von polymeren Glycosaminoglycanen, insbesondere zum Herstellen von niedermolekularen Abbauprodukten von Heparin, Chondroitinsulfat, Keratansulfat, Hyaluronsäure, Mesoglycan, Heparansulfat und Dermatansulfat, sowie von Alginsäure. Außerdem betrifft die Erfindung die mittels dieses Verfahrens hergestellten niedermolekularen Glycosaminoglycane und Alginsäuren und deren Anwendung.

Glycosaminoglycane zeigen eine Reihe von biologischen Wirkungen, wobei die Gerinnungshemmung, insbesondere durch Heparin, aus medizinischer Sicht am bedeutendsten ist. Die Schlüsselenzyme der Blutgerinnung, Faktor Xa und Thrombin, werden, wenn einmal gebildet, durch plasmaständige Inhibitoren wie Antithrombin III, Heparincofaktor II sowie TFPI (tissue factor pathway inhibitor) kontrolliert. Glycosaminoglycane und hier vor allem Heparin beschleunigen nach Kontakt mit den genannten Inhibitoren die Inhibitorwirkung. Heparinmoleküle mit weniger als 20 Saccharidmonomereinheiten wirken hierbei vorwiegend über die Inaktivierung des Gerinnungsfaktors Xa, der in der Gerinnungskaskade dem Thrombin vorgeschaltet ist (antithrombotischer Effekt); die Inaktivierung von Thrombin selbst wird dagegen durch die längerkettigen Anteile beschleunigt (antikoagulatorischer Effekt). In der medizinischen Praxis führt eine durch Glycosaminoglycane verstärkte Inaktivierung zu längeren Gerinnungszeiten und damit bei operativen Eingriffen zu vermehrten Blutungskomplikationen. Dieser Effekt ist bei kurzkettigen Heparinen wegen vorwiegender Hemmung der Thrombinbildung über die Inaktivierung des Gerinnungsfaktors Xa weniger ausgeprägt. Deshalb werden diese Fraktionen bevorzugt zur Thromboembolieprophylaxe eingesetzt.

Eingehende medizinische Untersuchungen zeigen, daß das Ziel der Entwicklung von Heparinen mit verbesserter antithrombotischer Wirksamkeit und gleichzeitig vermindertem Einfluß auf die Gerinnungsfähigkeit durch gezielten Abbau des natürlichen Heparins verwirklicht werden kann; für die Verwendung von niedermolekularen Heparinen bzw. anderen niedermolekularen Glycosaminoglycanen spricht zudem die Tatsache, daß diese eine bessere Bioverfügbarkeit bei gleichzeitiger Reduzierung der Nebenwirkungen gegenüber unfraktioniertem Ausgangsmaterial zeigen [vgl. J. Fareed et al.: Clin. Appl. Thrombosis/Hemostasis 2(1), 44-59 (1996); M. Samama, P. Desnoyers: "Thrombosis: Scientific and Clinical Perspectives" - In: Current Medical Literature, Hrsg.: T.S.A.f.T. Research 5 The Royal Scoiety of Medicine, S. 95-106 (1995); W. Jeske et al.: "Pharmacologic profile of a low molecular weight heparin depolymerized by gamma-irradiation", Semin. Thromb. Hemost. 21(2), 201-211 (1995); S. Haas. P. Haas: "Niedermolekulare Heparine: Die Anwendung in Klinik und Praxis" Steinen, Zett-Verlag (1996)].

Pharmakologische Wirkungen im Hinblick auf das Blutgerinnungssystem zeigen auch andere Glycosaminoglycane wie Dermatansulfat, Heparansulfat und Chondroitinsulfat. Weitere Einsatzgebiete von definierten Fraktionen dieser Stoffklassen sind die Steuerung der Angiogenese und die Tumortherapie.

Ein bekanntes Verfahren zur Gewinnung von niedermolekularen Glycosaminoglycanen ist die Fraktionierung der nativen Glycosaminoglycane. Glycosaminoglycane sind polydispers und enthalten nur wenige Prozent an Ketten mit Molmassen in dem für die medizinische Anwendung bevorzugten Bereich. Natürliches Heparin stellt beispielsweise ein Glycosaminoglycan dar, dessen Molmasse zwischen 5000 und 40000 schwankt. Die Gewinnung von niedermolekularen (sog. LMW-; d.h. Low Molecular Weight-) Glycosaminoglycanen aus natürlichen Glycosaminoglycanen durch Fraktionierung ist daher zwar möglich, aber wenig effektiv.

Aus diesem Grund wurden andere Verfahren zur Depolymerisation der hochmolekularen Anteile, insbesondere die Depolymerisation mittels chemischer oder enzymatischer Verfahren entwickelt [vgl. R.J. Linhardt: "Chemical and enzymatic methods for the depolymerisation and modification of heparin", Tokyo, Weinheim: Kodansha, VCH-Verlagsgesellschaft (1992)]. Zu diesen gehören die Depolymerisation mittels Säurehydrolyse, durch chemische oder enzymatische β-Eliminierung, die Depolymerisation mit salpetriger Säure, oxidative Depolymerisationsverfahren wie der Perjodatabbau oder die Spaltung mit Wasserstoffperoxid sowie radikalinduzierte Depolymerisationen. Zu den letzteren gehört auch der in EP-A 0 269 937 beschriebene Abbau mit γ-Strahlung.

Allen diesen Verfahren ist gemeinsam, daß sie zeit- und arbeitsintensiv sind. Außerdem führen insbesondere die chemischen Verfahren zu chemisch heterogenen und veränderten niedermolekularen Glycosaminoglycanen. Außerdem treten bei der Durchführung unerwünschte Nebenreaktionen auf.

Aus JP-A-59175436 (vgl. WPI/Derwent 1984-285034 [46] und Patent Abstracts of Japan, Vol. 9, nr. 28, C264) war bekannt, wässerige Lösungen von Polysacchariden zur Depolymerisation auf zwei Arten zu behandeln:
- Hochdruckversprühen bei Drücken von 600 bis 1200 kg/cm²,
- Behandlung mit Ultraschall mit einer Frequenz von 10 kHz (Oszillatorleistung 300 W)
und daraus niedrigviskose Lösungen der Polysaccharide herzustellen. Bei der gemäß diesem Stand der Technik angewandten Ultraschallfrequenz von 10 kHz können Glycosaminoglycane nur bis zu Molmassen im Bereich von 15000 bis 20000 abgebaut werden. Im Fall von nativem Heparin als Ausgangsmaterial würden unter den oben genannten Bedingungen keine Abbauprodukte auftreten, und das Ausgangsmaterial bliebe unverändert, da die Molmasse von nativem Heparin unterhalb der Untergrenze der Molmasse bei mechanischem Ultraschallabbau liegt.

In dem oben erläuterten Stand der Technik findet sich kein Hinweis auf die Anwendung von Ultraschall im Bereich hoher Frequenzen von 500 kHz bis 5 MHz zum Abbau von Polysacchariden.

Aufgabe der Erfindung ist es daher, ein Verfahren zur Herstellung von Abbauprodukten von polymeren Glycosaminoglycanen und von Alginsäure, insbesondere zur Herstellung von niedermolekularen Abbauprodukten von Heparin, Chondroitinsulfat, Keratansulfat, Dermatansulfat, Hyaluronsäure, Mesoglycan und/oder Heparansulfat, anzugeben, das einfach durchzuführen ist und Nebenreaktionen vermeidet; die erhaltenen niedermolekularen Glycosaminoglycane sollen außerdem chemisch-strukturell gegenüber der im nativen Zustand vorliegenden Struktur weitgehend unverändert sein, eine hohe Aktivität aufweisen und in therapeutischen Verfahren einsetzbar sein.

Ferner sollen die nach diesem Verfahren erhältlichen Abbauprodukte und die pharmazeutische Verwendung von Abbauprodukten von Glycosaminoglycanen angegeben werden.

Diese Aufgabe wird gemäß den unabhängigen Ansprüchen gelöst. Die abhängigen Ansprüche beziehen sich auf bevorzugte Ausführungsformen der Erfindung.

Die mittels des erfindungsgemäßen Verfahrens erhältlichen Glycosaminoglycane können in therapeutischen Verfahren, insbesondere bei der Behandlung von Thrombosen, der instabilen Angina pectoris, HIV-Erkrankungen, bei der Thromboseprophylaxe, Thromboembolieprophylaxe sowie in der Tumortherapie eingesetzt werden.

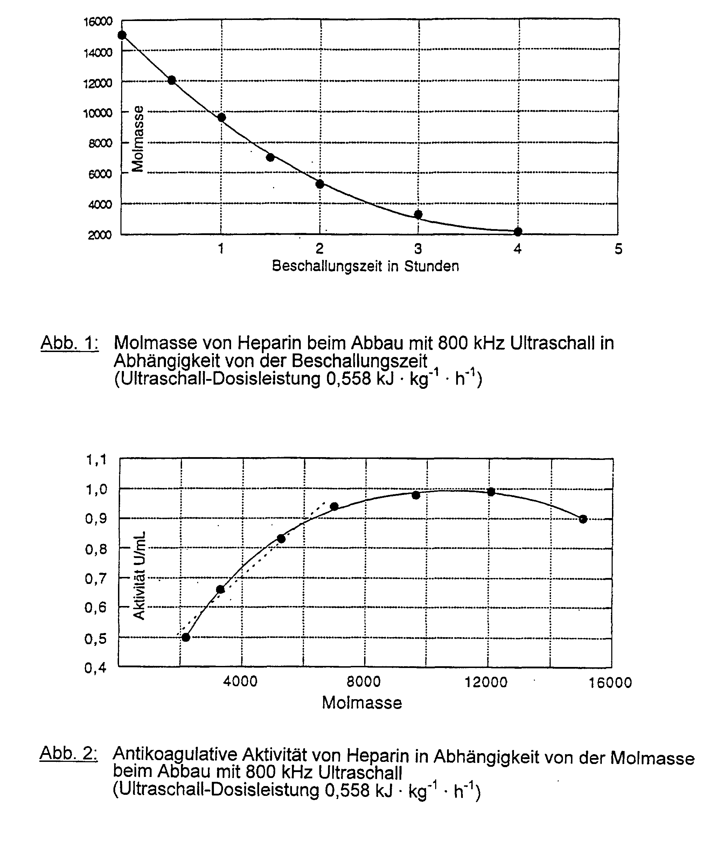

Abbildung 1 zeigt die Abnahme der Molmasse von nativem Heparin in Abhängigkeit von der eingebrachten Ultraschall-Dosisleistung bei Durchführung des erfindungsgemäßen Verfahrens bei einer Ultraschallfrequenz von 800 kHz. Die Abnahme der Molmasse erfolgt anfänglich annähernd linear.

Abbildung 2 zeigt, daß bei der Durchführung des erfindungsgemäßen Verfahrens an Heparin eine kurzzeitige Steigerung der antikoagulatorischen Aktivität - bestimmt als Anti-Faktor Xₐ-Aktivität in U/ml gemäß IL-Test® Heparin Xa (Instrumentation Laboratory SpA, Mailand, Italien) - erfolgt, ehe in der darauf folgenden Phase ein annähernd linearer Abfall der Aktivität zu verzeichnen ist. Bezogen auf das Ausgangsmaterial wird bei einer Molmasse von 6000 noch eine Aktivität von über 90 % gefunden.

Das erfindungsgemäße Verfahren beruht nach derzeitiger Vorstellung darauf, daß beim Durchtritt von Ultraschall durch eine Flüssigkeit Kompressions- und Expansionsphasen im Takt der Frequenz abwechseln. Überschreitet der Unterdruck in der Expansionsphase in einem Volumenelement die Adhäsionskräfte der Flüssigkeit, so reißt diese unter Bildung einer Kavitationsblase auf. Das Kollabieren der Kavitationsblasen erfolgt weitgehend adiabatisch, wodurch so hohe Temperaturen und Drücke auftreten, daß es zur Zersetzung von Wassermolekülen unter Bildung von OH- und H-Radikalen kommt, die in wäßrigen Lösungen chemische Reaktionen induzieren. Gleichzeitig treten in der an die kollabierenden Kavitationsblasen angrenzenden Flüssigkeit lokal hohe Geschwindigkeitsgradienten auf, welche in erster Linie für die durch Ultraschall ausgelösten mechanischen Effekte verantwortlich sind, die bei der Durchführung des erfindungsgemäßen Verfahrens bei den hochmolekularen Anteilen der Glycosaminoglycane Alginsäure zum Tragen kommen und zu einem mechanischen Kettenbruch führen. Bei den niedermolekularen Anteilen in den Glycosaminoglycanen bewirkt Ultraschall dagegen über die erzeugten Radikale einen Abbau.

Bei dem erfindungsgemäßen Verfahren ist die genaue Bestimmung der abgegebenen Ultraschalldosis wichtig, da nicht-standardisierte Ultraschallverfahren zu einer nicht reproduzierbaren Produktbildung führen. Nach einer bevorzugten Ausführungsform des erfindungsgemäßen Verfahrens liegt die gesamte eingebrachte Ultraschalldosis im Bereich von 0,3 bis 2,4 kJ · kg⁻¹.

Für die Beschallungen können unterschiedliche Ultraschallfrequenzen im kHz- oder MHz-Bereich verwendet werden. Erfindungsgemäß liegt die Ultraschallfrequenz im Bereich von 16 kHz bis 5 MHz und beträgt vorzugsweise 500 kHz bis 5 MHz und besonders bevorzugt 600 kHz bis 1000 kHz.

Die Ultraschallleistung beim Beschallen liegt erfindungsgemäß im Bereich von 0,1 bis 10 kJ · kg⁻¹ · h⁻¹, vorzugsweise im Bereich von 0,5 bis 0,7 kJ · kg⁻¹ · h⁻¹. Dazu werden die verwendeten Ultraschallgeräte mittels chemischer Dosimetrie auf die gewünschte Beschallungsintensität eingestellt.

Vor der Beschallung werden die Lösungen, die vorzugsweise einen pH-Wert im Bereich von 3 bis 8 aufweisen sollten, mit einem entsprechenden Gas gesättigt und während der Beschallung damit durchspült. Dabei werden insbesondere Inertgase, vorzugsweise Stickstoff oder Edelgase, insbesondere Argon, verwendet.

Die Beschallungstemperaturen liegen zwischen 5 und 40 °C, wobei Temperaturen zwischen 15 und 25 °C am günstigsten sind.

Als Beschallungsvorrichtung kann jede übliche ultraschallerzeugende Vorrichtung bei dem erfindungsgemäßen Verfahren eingesetzt werden. Bevorzugt ist jedoch der Einsatz von Ultraschall-Schwingern, insbesondere mit getrennten Reaktionsgefäßen, da ohne direkten Kontakt zum Ultraschallkopf die Möglichkeit einer Kontamination der Probe mit dem Material des Schwingers vermieden wird. Es können aber auch Durchflußreaktoren für eine kontinuierliche Verfahrensführung eingesetzt werden. Dies ist unter dem Gesichtspunkt einer Herstellung im industriellen Maßstab bevorzugt.

Das erfindungsgemäße Verfahren ist den bisherigen Verfahren nach dem Stand der Technik in einer Reihe von Punkten überlegen.
1) Im Gegensatz zu den bekannten Verfahren werden bei dem Ultraschallverfahren die in den Heparinmonomeren Glucosamin und Uronsäure gebundenen Sulfatgruppen nicht abgespalten, womit eine Resulfatisierung des Produktes nicht notwendig wird.
2) Durch Ultraschall kann die Depolymerisation in wäßriger Lösung ohne Zusatz von Chemikalien erfolgen. Es entfällt daher die aufwendige Reinigung der Produkte von den Resten der eingesetzten Chemikalien. Zudem müssen keine Chemikalien oder Abwässer entsorgt werden. Diesen Vorteil bietet von den bekannten Verfahren allenfalls der Abbau durch γ-Strahlung.
3) Gegenüber dem Einsatz von γ-Strahlung ist bei dem erfindungsgemäßen Ultraschallverfahren vorteilhaft, daß keine kostspieligen Bestrahlungsanlagen eingesetzt und keine aufwendigen Strahlenschutzmaßnahmen ergriffen werden müssen.
4) Beim Abbau von Heparinen durch Ultraschall kann eine Aktivitätssteigerung von ca. 10 % erreicht werden. Die antikoagulative Aktivität liegt nach dem Abbau um den Faktor zwei höher als beim Verfahren unter Anwendung von γ-Strahlung.
5) Während bei der γ-Strahlung in Abwesenheit von Sauerstoff bei Kohlenhydraten Polymerisationsreaktionen auftreten können, tritt dieser Effekt, welcher teilweise zu unerwünschten hochmolekularen Produkten führt, beim Ultraschall nicht auf.
6) Bei der Anwendung des erfindungsgemäßen Verfahrens und der damit hergestellten Produkte sind im Unterschied zum γ-Bestrahlungsverfahren keine schwerwiegenden Besorgnisse seitens der Bevölkerung zu erwarten (siehe Lebensmittelbestrahlung); dies ist umso bedeutsamer, als die erhaltenen Glycosaminoglycane erfindungsgemäß in therapeutischen Verfahren eingesetzt werden sollen.
7) Da mit zunehmender Molmasse bei der Depolymerisation neben radikalinduzierten Reaktionen auch die mechanischen Effekte des Ultraschalls zum Tragen kommen, findet man bei hohen Molmassen vorwiegend einen Bruch im Zentrum der Polymerkette. Dies führt zu einem deutlich beschleunigten Abbau der höhermolekularen Anteile und einer Verschmälerung der Molmassenverteilung. Das Verhältnis dieser beiden Effekte des Ultraschalls läßt sich durch die Frequenz und die Wahl des in der Flüssigkeit gelösten Gases steuern.
8) Über die Wahl der geeigneten Beschallungszeit können die gewünschten Molmassen erhalten werden. Damit können ohne großen Aufwand je nach Applikation im Hinblick auf die Molmasse unterschiedliche Substanzen hergestellt werden.

Mittels Ultraschall ist es somit möglich, mit relativ geringem apparativem Aufwand und ohne Zusatz weiterer Chemikalien definierte LMW-Glycosaminoglycane mit einer hohen biologischen Aktivität herzustellen.

Beim Abbau mit Ultraschall findet man anfänglich trotz Erniedrigung der Molmasse eine Erhöhung der biologischen Aktivität. Anschließend nehmen die Molmasse und die biologische Aktivität ab (vgl. Abbildung 2 und Tabelle 1).

Die nach dem erfindungsgemäßen Verfahren hergestellten LMW-Glycosaminoglycane bzw. Alginsäuren besitzen Molmassen im Bereich von 2000 bis 15000 (Tabelle 2). Im Falle, daß als niedermolekulares Glycosaminoglycan Heparin mittels des erfindungsgemäßen Verfahrens hergestellt wird, liegt die bevorzugte Molmasse im Bereich von 3 · 10³ bis 10 · 10³, stärker bevorzugt im Bereich von 3 · 10³ bis 8 · 10³.

Niedermolekulares Glycosaminoglycan, insbesondere Heparin, das nach dem erfindungsgemäßen Verfahren erhältlich ist, dient zur Anwendung in therapeutischen Verfahren, insbesondere bei der Behandlung von Thrombosen, der instabilen Angina pectoris, HIV-Erkrankungen, bei der Thromboseprophylaxe, Thromboembolieprophylaxe sowie in der Tumortherapie.

Die erfindungsgemäß hergestellten Glycosaminoglycane werden als pharmazeutische Präparate in Form von Tabletten, Kapseln, Tropfen, Lösungen, als Emplastrum oder als Injektionslösungen zur intravenösen, intramuskulären oder subcutanen Injektion angewandt. Unter Emplastrum ist hierbei insbesondere ein medikamentöses Pflaster oder ein Spezialpflaster zu verstehen wie es für die sog. transdermalen therapeutischen Systeme (TTS) verwendet wird.

Im Fall von Heparin ist die Anwendung in Form von Injektionslösungen für die intravenöse, subcutane oder intramuskuläre Injektion ganz besonders bevorzugt.

**Tabelle 1:**

| Anti-Xa-Aktivität in U/ml in Abhängigkeit von der eingebrachten Ultraschall-Dosisleistung bei 800 kHz | | | | | | | |
|---|---|---|---|---|---|---|---|
| kJ·kg⁻¹ | 0 | 0,28 | 0,56 | 0,84 | 1,11 | 1,67 | 2,23 |
| U/ml | 0,9 | 0,99 | 0,98 | 0,94 | 0,83 | 0,66 | 0,50 |

**Tabelle 2:**

| Molmasse in Abhängigkeit von der eingebrachten Ultraschall-Dosisleistung bei 800 kHz | | | | | | | |
|---|---|---|---|---|---|---|---|
| kJ·kg⁻¹ | 0 | 0,28 | 0,56 | 0,84 | 1,11 | 1,67 | 2,23 |
| Molmasse | 15041 | 12072 | 9637 | 6975 | 5256 | 3279 | 2169 |

Das folgende Beispiel dient der Veranschaulichung der Herstellung definierter Heparine nach dem erfindungsgemäßen Verfahren.

### Beispiel

Aus Heparin-Natrium (Liquemin® N 25000, Hoffmann-La Roche AG) mit einer Ausgangs-Molmasse von 15000 wurde eine wäßrige Lösung mit 150 I.E./ml hergestellt.

10 ml der Lösung wurden in das Ultraschall-Reaktionsgefäß für einen 800 kHz-Schwinger gegeben, mit Argon gesättigt und damit während der Beschallung gespült.

Die Lösung wurde mit 800 kHz Ultraschall mit einer Dosis von
0,84 kJ · kg⁻¹ bei einer Ultraschall-Dosisleistung von
0,56 kJ · kg⁻¹ · h⁻¹ beschallt.

Nach der Beschallung wurden je 500 ml der verschiedenen Proben im Vakuum getrocknet und für die Größenausschlußchromatographie mit 500 ml Ammoniumformiatlösung (25 mM) wieder gelöst.

Die Größenausschlußchromatographie wurde auf einer Ultrahydrogel-250Å-Säule (Millipore) nach einer Eichung mit Heparinstandards (Novo Nordisk, Gentofte, Dänemark) durchgeführt.

Zur Auswertung der Molmassenverteilung diente das Programm PL Caliber (Version 5.2) der Firma Polymer Laboratories, Shropshire, UK.

Die Bestimmung der antikoagulatorischen Aktivität erfolgte über den IL-Test® Heparin Xa (Instrumentation Laboratory SpA, Mailand, Italien) ohne weitere Aufreinigung direkt an den wäßrigen Proben.

Die Ergebnisse der Abbauuntersuchungen unter den oben genannten Bedingungen sind in der nachfolgend angegebenen Tabelle 3 angegeben.

**Tabelle 3**

| Die erhaltene Probe zeigte folgende Eigenschaften: | |
|---|---|
| - Molmasse | 7000 Dalton |
| - Anti-Xa-Aktivität | 104 % der Ausgangssubstanz |

## Patentansprüche

1. Verfahren zur Herstellung von Abbauprodukten von polymeren Glycosaminoglycanen und von Alginsäure durch Behandlung der polymeren Glycosaminoglycane bzw. der Alginsäure in wässeriger Lösung mit Ultraschall,
**dadurch gekennzeichnet, daß**
Ultraschall einer Frequenz im Bereich von 500 kHz bis 5 MHz angewandt wird.

2. Verfahren nach Anspruch 1, **dadurch gekennzeichnet,**
**daß** Ultraschall einer Frequenz im Bereich von 600 kHz bis 1 MHz angewandt wird.

3. Verfahren nach Anspruch 1 oder 2, **dadurch gekennzeichnet, daß** Ultraschall in einer Dosis von 0,3 bis 2,4 kJ·kg⁻¹ angewandt wird.

4. Verfahren nach einem der Ansprüche 1 bis 3, **dadurch gekennzeichnet, daß** Ultraschall mit einer Dosisleistung von 0,1 bis 10 kJ·kg⁻¹·h⁻¹ angewandt wird.

5. Verfahren nach einem der Ansprüche 1 bis 4, **dadurch gekennzeichnet, daß** die Behandlung mit Ultraschall bei einer Temperatur von 15 bis 25 °C vorgenommen wird.

6. Verfahren nach einem der Ansprüche 1 bis 5, **dadurch gekennzeichnet, daß** die wässerige Lösung der Glycosaminoglycane bzw. der Alginsäure einen pH-Wert von 3 bis 8 aufweist.

7. Verfahren nach einem der Ansprüche 1 bis 6, **dadurch gekennzeichnet, daß** die wässerige Lösung der Glycosaminoglycane bzw. der Alginsäure vor der Behandlung mit Ultraschall mit einem Inertgas, vorzugsweise mit N₂ oder Ar, gesättigt und während der Behandlung mit Ultraschall damit durchspült wird.

8. Verfahren nach einem der Ansprüche 1 bis 7, **dadurch gekennzeichnet, daß** als polymere Glycosaminoglycane Heparin, Chondroitinsulfat, Dermatansulfat, Keratansulfat, Hyaluronsäure und/oder Mesoglycan eingesetzt werden.

9. Abbauprodukte von Glycosaminoglycanen bzw. Alginsäure, erhältlich nach dem Verfahren eines der Ansprüche 1 bis 8.

10. Abbauprodukte nach Anspruch 9, **dadurch gekennzeichnet, daß** sie eine Molmasse im Bereich von 3·10³ bis 10·10³ und vorzugsweise im Bereich von 3·10³ bis 8·10³ aufweisen.

11. Abbauprodukte nach Anspruch 9 oder 10, **dadurch gekennzeichnet, daß** es sich um Heparin handelt.

12. Pharmazeutische Mittel, **gekennzeichnet, durch** ein Abbauprodukt eines Glycosaminoglycans nach einem der Ansprüche 9 bis 11.

## Claims

1. A method of producing decomposition products of polymeric glycosaminoglycans and alginic acid by treatment of polymeric glycosaminoglycans or of alginic acid in aqueous solution with ultrasound, **characterised by** use of ultrasound at a frequency in the range from 500 kHz to 5 MHz.

2. A method according to claim 1, **characterised by** use of ultrasound at a frequency in the range from 600 kHz to 1 MHz.

3. A method according to claim 1 or 2, **characterised by** use of ultrasound in a dose from 0.3 to 2.4 kJ/kg.

4. A method according to any of claims 1 to 3, **characterised by** use of ultrasound at a dose of 0.1 to 10 kJ/kg/h.

5. A method according to any of claims 1 to 4, **characterised by** treatment with ultrasound at a temperature of 15 to 25°C.

6. A method according to any of claims 1 to 5, **characterised in that** the aqueous solution of glycosaminoglycans or of alginic acid has a pH of 3 to 8.

7. A method according to any of claims 1 to 6, **characterised in that** before treatment with ultrasound, the aqueous solution of glycosaminoglycans or of alginic acid is saturated with an inert gas, preferably N2 or Ar, which is bubbled through during treatment with ultrasound.

8. A method according to any of claims 1 to 7, **characterised by** use of the following polymeric glycosaminoglycans: heparin, chondroitin sulphate, dermatan sulphate, keratan sulphate, hyaluronic acid and/or mesoglycans.

9. Decomposition products of glycosaminoglycans or alginic acid obtainable by the method according to any of claims 1 to 8.

10. Decomposition products according to claim 9, **characterised in that** they have a molecular weight in the range from 3.103 to 10.103, preferably in the range from 3.103 to 8.103.

11. Decomposition products according to claim 9 or 10, **characterised in that** they are heparin.

12. A pharmaceutical agent **characterised by** a decomposition product of a glycosaminoglycan according to any of claims 9 to 11.

## Revendications

1. Procédé pour produire des produits de dégradation de glycosaminoglycanes polymères et d'acide alginique par traitement des glycosaminoglycanes polymères ou de l'acide alginique en solution aqueuse à l'aide d'ultrasons,
**caractérisé en ce que**,
on utilise des ultrasons d'une fréquence située dans la plage allant de 500 kHz à 5 MHz.

2. Procédé selon la revendication 1, **caractérisé en ce que**,
on utilise des ultrasons d'une fréquence située dans la plage allant de 600 kHz à 1 MHz.

3. Procédé selon la revendication 1 ou 2, **caractérisé en ce que**,
on utilise des ultrasons à une dose allant de 0,3 à 2,4 kJ.kg⁻¹.

4. Procédé selon l'une quelconque des revendications 1 à 3,
**caractérisé en ce que** l'on utilise des ultrasons à une puissance de dose de 0,1 à 10 kJ.kg⁻¹.h⁻¹.

5. Procédé selon l'une quelconque des revendications 1 à 4,
**caractérisé en ce que**, on opère le traitement aux ultrasons à une température située entre 15 et 25° C.

6. Procédé selon l'une quelconque des revendications 1 à 5,
**caractérisé en ce que** la solution aqueuse de glycosaminoglycanes ou d'acide alginique présente un pH de 3 à 8.

7. Procédé selon l'une quelconque des revendications 1 à 6,
**caractérisé en ce que** la solution aqueuse de glycosaminoglycanes ou d'acide alginique est saturée avec un gaz inerte, de préférence N₂ ou Ar, avant le traitement aux ultrasons et est rincée avec celui-ci pendant le traitement aux ultrasons.

8. Procédé selon l'une quelconque des revendications 1 à 7,
**caractérisé en ce que** l'on met en oeuvre comme glycosaminoglycanes polymères de l'héparine, du chondroïtine sulfate, du dermatane sulfate, du kératane sulfate, de l'acide hyaluronique et / ou du mésoglycane.

9. Produits de dégradation des glycosaminoglycanes ou de l'acide alginique que l'on peut obtenir selon le procédé de l'une des revendications 1 à 8.

10. Produits de dégradation selon la revendication 9, **caractérisé en ce qu'**ils présentent une masse molaire située dans la plage allant de 3.10³ à 10.10³ et de préférence dans la plage allant de 3.10³ à 8.10³.

11. Produits de dégradation selon la revendication 9 ou 10,
**caractérisé en ce qu'**il s'agit d'héparine.

12. Produit pharmaceutique **caractérisé par** un produit de dégradation d'un glycosaminoglycane selon l'une quelconque des revendications 9 à 11.
